# EUROPÄISCHE PATENTSCHRIFT

(11) **EP 1 568 896 B1**
(45) Veröffentlichungstag und Bekanntmachung des Hinweises auf die Patenterteilung: **28.01.2015**
(21) Anmeldenummer: 05003552.6
(22) Anmeldetag: 18.02.2005
(51) Int. Cl.: F16B 5/04, F16B 19/08, B21J 15/04, B65D 77/06

(54) **Mittelfüße und/oder Eckfüße aus Blech für Transport- und Lagerbehälter für Flüssigkeiten und Schüttgut**
Middle and/or corner legs of sheet metal for transport and storage containers for liquids and bulk materials
Supports intermédiaires et/ou de coin en tôle pour récipients de transport et de stockage pour liquides et matériaux en vrac

(30) Priorität: 27.02.2004 DE 202004003020 U
(43) Veröffentlichungstag der Anmeldung: 31.08.2005
(73) Patentinhaber: Schütz GmbH & Co. KGaA, 56242 Selters / Westerwald (DE)
(72) Erfinder: Schütz, Udo, 56242 Selters / Westerwald (DE)
(74) Vertreter: advotec.

(56) Entgegenhaltungen:
- EP-A- 1 528 010
- WO-A-01/91937
- DE-U1- 20 217 856
- FR-A1- 2 619 169
- US-A- 5 285 873

## Beschreibung

Die Erfindung betrifft Mittelfüße und/oder Eckfüße aus Blech für Transport- und Lagerbehälter für Flüssigkeiten und Schüttgut, die mit einem palettenartigen Untergestell, einem auf diesem stehenden Innenbehälter aus Kunststoff mit einem verschließbaren Einfüllstutzen und einem Entleerstutzen zum Anschluß einer Entnahmearmatur sowie einem als Gitter- oder Blechmantel ausgebildeten Außenmantel ausgestattet sind, wobei das Untergestell einen Boden zum Abstützen des Innenbehälters auf den Mittelfüßen und Eckfüßen aufweist, die auf einem Fußrahmen aus Blech oder Kufen aus Metall, Kunststoff oder Holz angebracht sind und an denen der Boden des Untergestells sowie der Außenmantel des Innenbehälters befestigt sind.

Bei der Montage von aus der DE 100 62 088 C2 bekannten Transport- und Lagerbehältern für Flüssigkeiten der vorstehend beschriebenen Art werden der Unterrahmen des Gitterkorbs aus Metall und der Blechboden des palettenartigen Untergestells, auf dem der Kunststoff-Innenbehälter für Flüssigkeiten steht, mit den Eck- und Mittelfüßen des Untergestells verschraubt und die Füße werden mit dem Fußrahmen des Untergestells verschweißt. Durch die Anwendung unterschiedlicher Verbindungstechniken und den dadurch bedingten erheblichen Montageaufwand sowie den Bedarf an Kleinteilen für die Montage wie Blechschrauben und Unterlegscheiben werden die Herstellungskosten der Flüssigkeitsbehälter entsprechend verteuert.

Der Erfindung liegt die Aufgabe zugrunde, die Mittelfüße und/oder die Eckfüße im Hinblick auf eine Vereinfachung der Montage eines Transport- und Lagerbehälters weiterzuentwickeln.

Diese Aufgabe wird erfindungsgemäß gelöst durch Mittelfüße und/oder Eckfüße mit den Merkmalen des Patentanspruchs 1.

Die Unteransprüche beinhalten vorteilhafte und zweckmäßige Weiterbildungen der Erfindung.

Der Erfindungsgedanke beruht darauf, Hohlniete und entsprechende Nietlöcher in die einzelnen Bauteile eines gattungsgemäßen Transport- und Lagerbehälters für Flüssigkeiten und Schüttgut zu integrieren, so daß zur Verbindung der Bauteile bei der Montage lediglich eine Fügetechnik, nämlich das Nieten zur Anwendung gelangt und gesonderte Hohlniete mit einem Setzkopf nicht mehr erforderlich sind. Auf diese Weise wird der Montageaufwand verringert und die Herstellungskosten werden gesenkt.

Die Erfindung ist nachstehend anhand von Zeichnungsfiguren erläutert, die folgendes darstellen:
- Fig. 1: eine perspektivische Darstellung eines Transport- und Lagerbehälters für Flüssigkeiten mit einem palettenartigen Untergestell aus Metall,
- Fig. 2: eine Sprengdarstellung des Transport- und Lagerbehälters nach Fig. 1 ohne Innenbehälter,
- Fig. 3: eine perspektivische Innenansicht einer ersten Ausführungsform eines Eckfußes des Untergestells des Transport- und Lagerbehälters in vergrößerter Darstellung,
- Fig. 4: eine vergrößerte Schnittdarstellung der Hohlnietverbindungen des Eckfußes nach Fig. 3 mit dem äußeren Rand des Bodens des Untergestells und dem Unterrahmen des Gitterkorbs sowie dem Fußrahmen des Untergestells,
- Fig. 5: eine perspektivische Innenansicht einer weiteren Ausführungsform eines Eckfußes des Untergestells des Transport- und Lagerbehälters in vergrößerter Darstellung,
- Fig. 6: eine perspektivische Ansicht einer ersten Ausführungsform eines seitlichen Mittelfußes des Untergestells des Transport- und Lagerbehälters in vergrößerter Darstellung,
- Fig. 7: eine Seitenansicht des seitlichen Mittelfußes nach Fig. 6,
- Fig. 8: eine vergrößerte Schnittdarstellung der Hohlnietverbindungen des Mittelfußes nach den Figuren 6 und 7 mit dem äußeren Rand des Bodens des Untergestells und dem Unterrahmen des Gitterkorbs sowie dem Fußrahmen des Untergestells,
- Fig. 9: eine perspektivische Ansicht einer weiteren Ausführungsform eines Mittelfußes des Untergestells des Transport- und Lagerbehälters in vergrößerter Darstellung,
- Fig. 10: eine perspektivische Innenansicht einer dritten Ausführungsform eines Mittelfußes des Untergestells in vergrößerter Darstellung,
- Fig. 11: die Hohlnietverbindungen des Unterrahmens des Gitterkorbs mit dem äußeren Rand des Bodens des Untergestells im Bereich der vorderen Auslaufmulde in vergrößerter Darstellung,
- Fig. 12: eine perspektivische Darstellung eines Transport- und Lagerbehälters mit einem mit Holzkufen ausgestatteten Untergestell und
- Fig. 13: eine perspektivische Schnittdarstellung der Hohlnietverbindungen eines seitlichen Mittelfußes mit dem äußeren Rand des Bodens des Untergestells und dem Unterrahmen des Gitterkorbs sowie mit einer Holzkufe des Untergestells des Behälters nach Fig. 12.

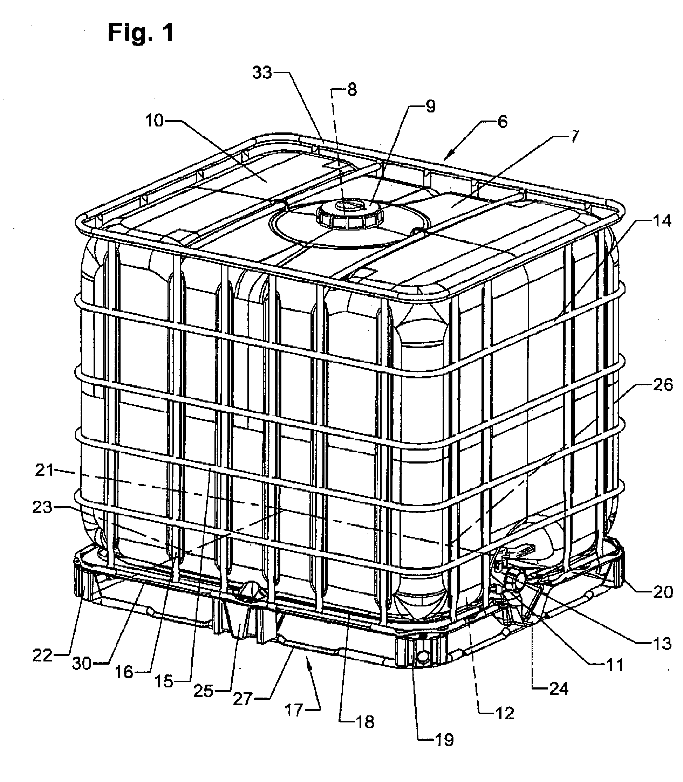

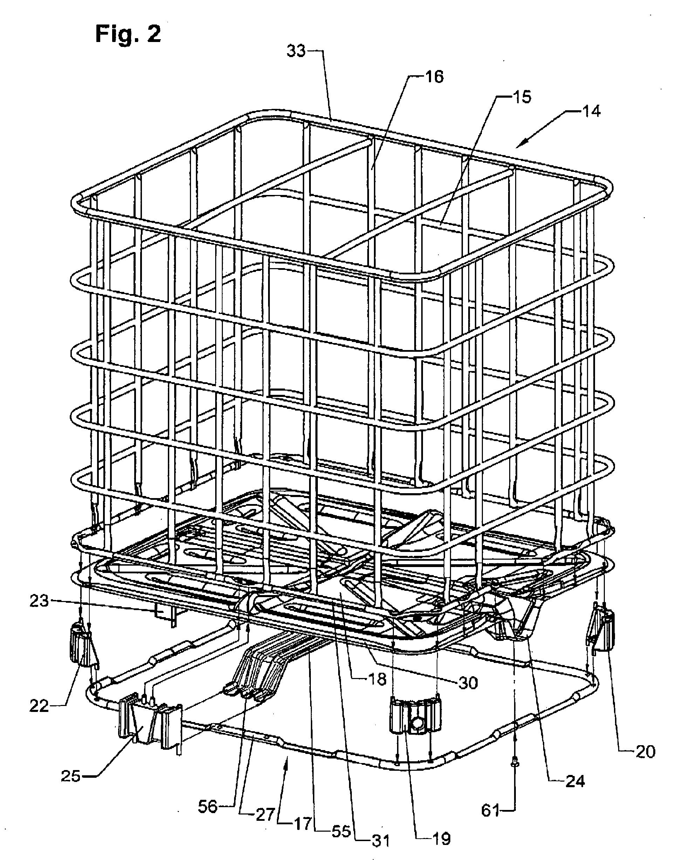

Der als Ein- und Mehrwegbehälter verwendete Transport- und Lagerbehälter 6 nach den Figuren 1 und 2 für Flüssigkeiten und Schüttgut weist als Hauptbauteile einen austauschbaren, quaderförmigen Innenbehälter 7 aus Kunststoff, der mit einem mit einem Deckel 9 verschließbaren Einfüllstutzen 8 im oberen Boden 10 und einem Entleerstutzen 11 im Bereich des unteren Bodens 12 zum Anschluß eines Entnahme- und Spülhahns 13 ausgestattet ist, einen als Gitterkorb 14 ausgebildeten Außenmantel aus sich kreuzenden waagrechten und senkrechten Gitterstäben 15, 16 aus Metall sowie ein palettenartiges Untergestell 17 aus Metall mit euronormgerechten Längen- und Breitenabmessungen auf.

Das zur Handhabung mittels Hubstapler, Regalbediengerät und dergleichen Transportmitteln eingerichtete, palettenartige Untergestell 17 des Transport- und Lagerbehälters 6 besitzt einen Boden 18 aus Blech zum Abstützen des Innenbehälters 7. Der Boden 18 des Untergestells 17 ruht auf vier Eckfüßen 19 - 22 und einem hinteren Mittelfuß 23 aus Blech, einem vorderen, aus dem Boden 18 ausgeformten Mittelfuß 24, der unterhalb des Entnahme- und Spülhahns 13 des Innenbehälters 7 angeordnet ist, sowie auf zwei seitlichen Mittelfüßen 25, 26. Eck- und Mittelfüße 19 - 26 des Untergestells 17 sind auf einem Fußrahmen 27 aus Metall befestigt.

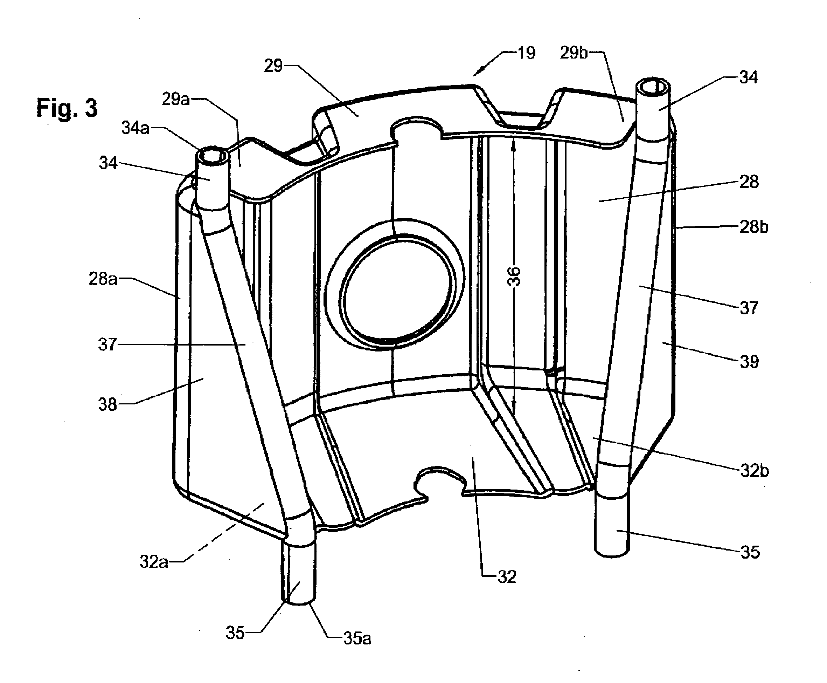

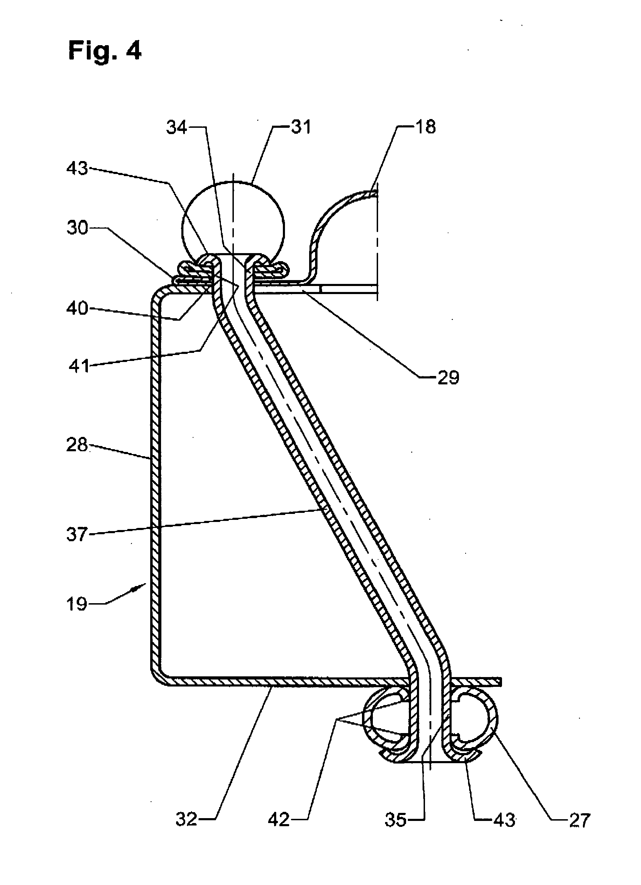

Der Eckfuß 19 des Untergestells 17 des Transport- und Lagerbehälters 6 gemäß den Figuren 3 und 4 wird durch ein gewölbtes Schalenblech 28 mit einem oberen Abstützrand 29 zur Auflage des äußeren Randes 30 des flachwannenartigen Bodens 18 des Untergestells 17 und des Unterrahmens 31 des als Gitterkorb 14 ausgebildeten Außenmantels sowie mit einem unteren Aufstandsrand 32 gebildet, mit dem der Eckfuß 19 auf dem Fußrahmen 27 des Untergestells 17 steht. Beim Übereinanderstapeln mehrerer Transportbehälter 6 stützt sich der jeweils aufgestapelte Transportbehälter mit dem unteren Aufstandsrand 32 der Eckfüße 19 - 22 auf dem Oberrahmen 33 des Gitterkorbs 14 des jeweils untergestapelten Transportbehälters ab.

An den beiden äußeren Abschnitten 29a, 29b des oberen Abstützrandes 29 des Schalenblechs 28 des Eckfußes 19 sind zwei obere, hohle Nietschäfte 34, 34 und an den beiden äußeren Abschnitten 32a, 32b des unteren Aufstandsrandes 32 des Schalenblechs 28 zwei untere, hohle Nietschäfte 35, 35 angeordnet. Die oberen und unteren Nietschäfte 34, 35 stehen nach oben bzw. unten über den Eckfuß 19 vor. Die unteren Nietschäfte 35, 35 an dem Schalenblech 28 des Eckfußes 19 sind zu den oberen Nietschäften 34, 34 parallel nach innen und in Vertikalrichtung entsprechend dem Vertikalabstand 36 des oberen Abstützrandes 29 und des unteren Aufstandsrandes 32 des Eckfußes 19 gegeneinander versetzt angeordnet.

Jeweils ein oberer und ein unterer Nietschaft 34, 35 des Eckfußes 19 sind durch die beiden abgebogenen Enden eines Rohrstücks 37 gebildet, wobei die Rohrstücke 37, 37 an zwei von den äußeren Rändern 28a, 28b des Schalenblechs 28 des Eckfußes 19 nach innen abgewinkelte, abgeschrägte, äußere Schenkel 38, 39 angeformt, vorzugsweise angerollt sind.

Bei einer abgeänderten Ausführungsform des Eckfußes 19 sind die Rohrstücke 37 mit jeweils einem oberen und einem unteren Nietschaft 34, 35 an das Schalenblech 28 angeschweißt.

Durch die an der Innenseite der äußeren Schenkel 38, 39 des Eckfußes 19 angerollten Rohrstücke 37 mit jeweils einem oberen und einem unteren Nietschaft 34, 35 werden die Schenkel 38, 39 des Eckfußes 19 versteift. Durch diese Versteifung wird eine Beschädigung der Eckfüße 19 - 22 beim Unterfahren des Untergestells 17 eines Transport- und Lagerbehälters 6 und einem Verschieben des Behälters durch die Greifarme eines Transportfahrzeuges, beispielsweise eines Gabelsteplers vermieden.

Bei der Montage des Untergestells 17 und des Gitterkorbs 14 eines Transport- und Lagerbehälters 6 werden die oberen Nietschäfte 34 der Eckfüße 19 - 22 durch entsprechende deckungsgleiche Nietlöcher 40, 41 im äußeren Rand 30 des Bodens 18 und in dem im Bereich der Nietlöcher 41 abgeflachten Unterrahmen 31 des Gitterkorbs 14 durchgesteckt und der mit entsprechenden Nietlöchern 42 versehene, im Bereich derselben abgeflachte Fußrahmen 27 des Untergestells 17 wird auf die unteren Nietschäfte 35 der Eckfüße 19 - 22 aufgesetzt. Anschließend werden die über den im Bereich der Nietlöcher 41 abgeflachten Unterrahmen 31 des Gitterkorbs 14 vorstehenden, freien Enden 34a der oberen Nietschäfte 34 und die über den im Bereich der Nietlöcher 42 abgeflachten Fußrahmen 27 des Untergestells 17 vorstehenden unteren Nietschäfte 35 der Eckfüße 19 - 22 mit einem Nietwerkzeug zu Schließköpfen 43 verformt und damit die Eckfüße 19 - 22 einerseits mit dem Boden 18 und dem Unterrahmen 31 des Gitterkorbs 14 und andererseits mit dem Fußrahmen 27 fest vernietet.

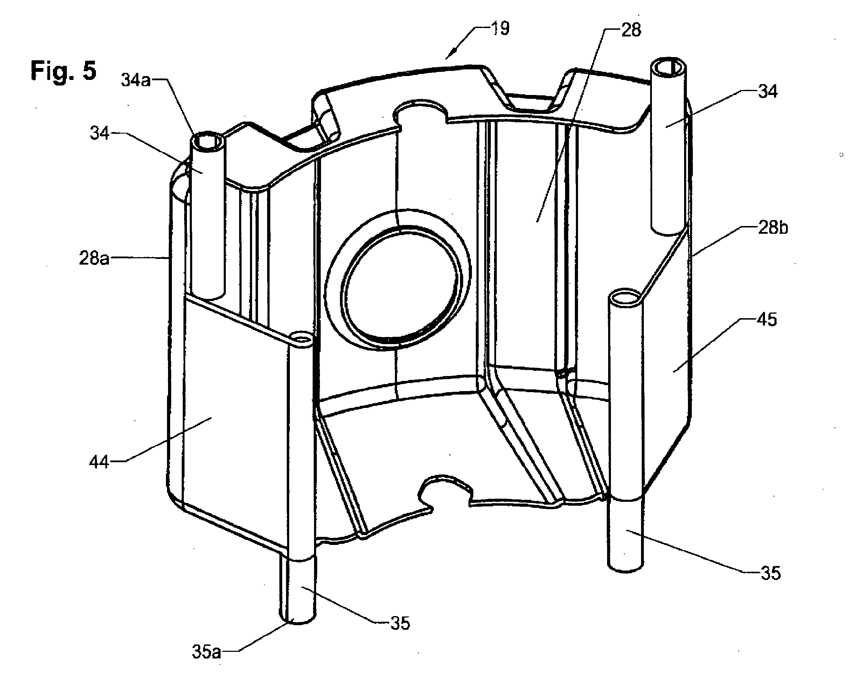

Bei einer weiteren Ausführungsform eines Eckfußes 19 gemäß Figur 5 sind die oberen Nietschäfte 34, 34 an die beiden äußeren Ränder 28a, 28b eines Schalenblechs 28 und die unteren Nietschäfte 35, 35 an zwei von den Ränder 28a, 28b des Schalenblechs 28 nach innen abgewinkelte, äußere Schenkel 44, 45 angerollt.

Ferner besteht die Möglichkeit, bei dem Eckfuß 19 nach Figur 5 die oberen und unteren Nietschäfte 34, 35 an das Schalenblech 28 und an dessen Schenkel 44, 45 anzuschweißen.

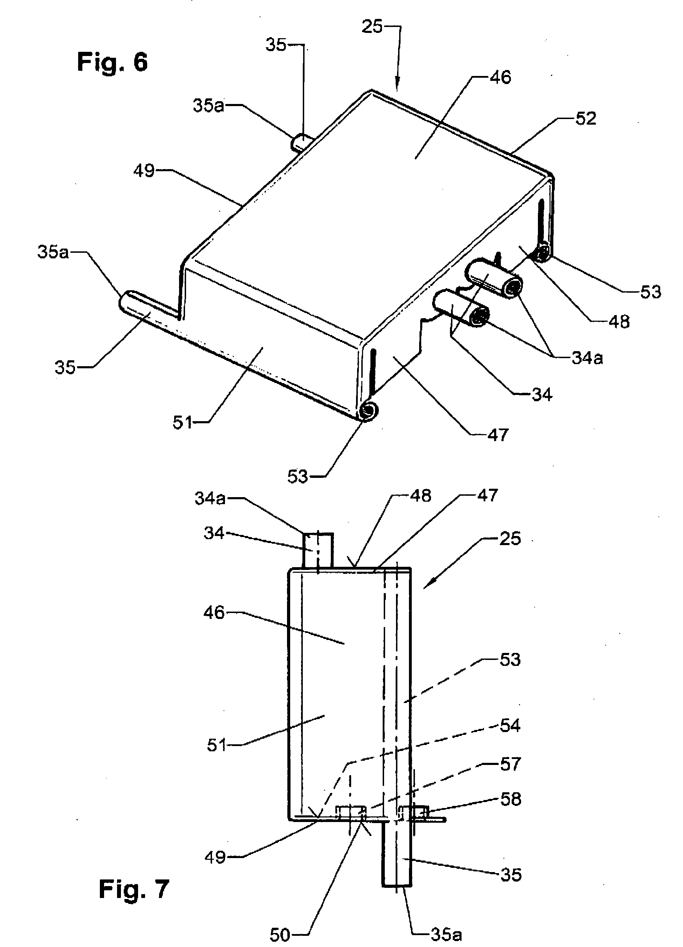

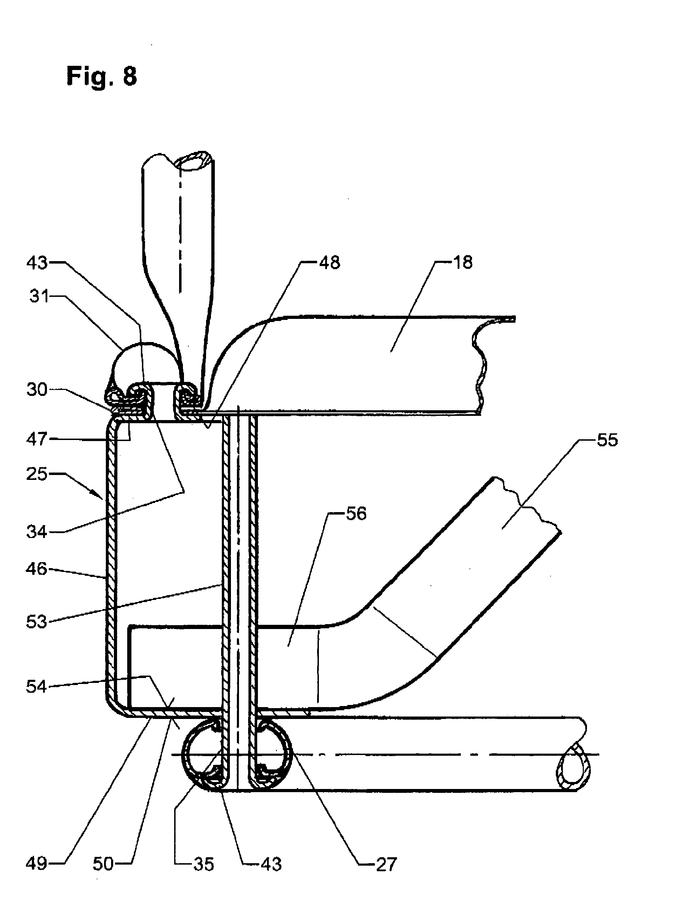

Die seitlichen Mittelfüße 25, 26, von denen einer 25 in den Figuren 6 bis 8 dargestellt ist, und der hintere Mittelfuß 23 des Untergestells 17 besitzen die Form eines offenen Kastens 46 mit einer oberen, eine Abstützfläche 28 aufweisenden Wand 47 und einer unteren Wand 49 mit einer Aufstandsfläche 50, zwei an die beiden Seitenwände 51, 52 des Kastens 46 angerollten Rohrstücken 53, 53 mit jeweils einem unteren Nietschaft 35 und zwei oberen an die Abstützfläche 48 der oberen Kastenwand 47 angerollten Nietschäften 34, 34. Die Mittelfüße 23, 25, 26 werden mittels der oberen und unteren Nietschäfte 34, 35, deren freie Enden 34a, 35a zu Schließköpfen 43 verformbar sind, in gleicher Weise wie die Eckfüße 19 - 22 mit dem äußeren Rand 30 des Bodens 18 und dem auf diesem aufliegenden Unterrahmen 31 des Gitterkorbs 14 sowie dem Fußrahmen 27 vernietet.

Die untere Wand 49 der beiden seitlichen Mittelfüße 25, 26 besitzt auf der Innenseite eine Abstützfläche 54 für jeweils eines der beiden nach unten abgebogenen äußeren Enden 56 eines mittigen Versteifungssteges 55 des Untergestellbodens 18, und aus der unteren Kastenwand 49 der Mittelfüße 25, 26 sind zwei nach innen gerichtete, hohle Nietschäfte 57, 58 zum Vernieten der Mittelfüße mit den Enden 56 des Versteifungssteges 55 des Untergestellbodens 18 ausgeformt (Fign. 2, 6-8).

Anstatt durch Nieten können die seitlichen Mittelfüße 25, 26 mit den Enden 56 des Versteifungssteges 55 des Untergestellbodens 18 durch ein als Durchsetzfügen bekanntes Fügeverfahren miteinander verbunden werden. Ferner besteht die Möglichkeit, die Nietschäfte 34, 35, 57, 58 als gesonderte Hülsen an die seitlichen Mittelfüße 25, 26 anzuschweißen.

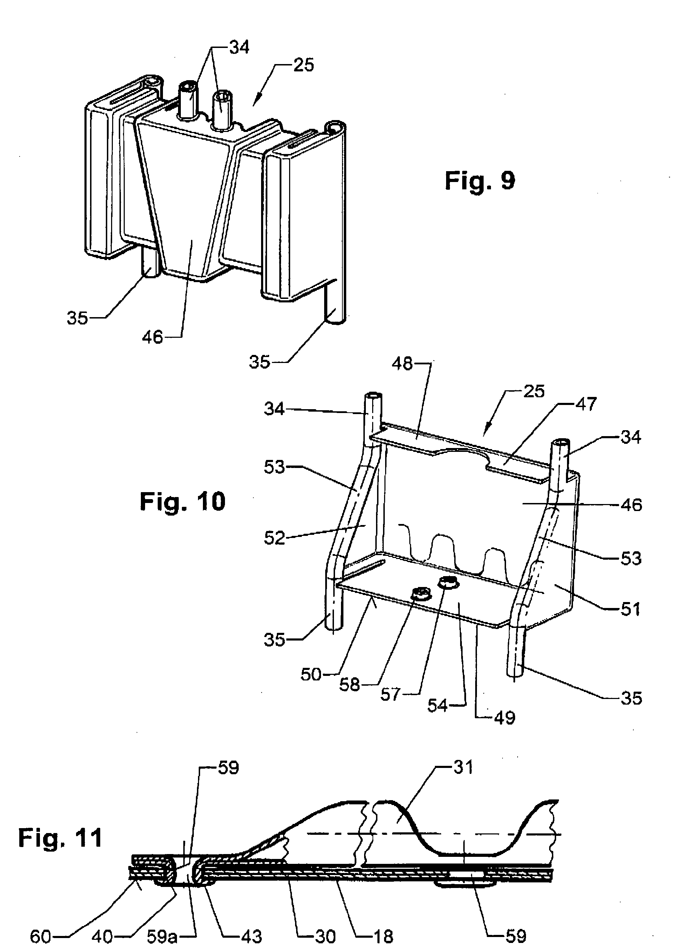

Figur 9 zeigt einen seitlichen Mittelfuß 25 des Untergestells 17 mit einer segmentierten, einteiligen Kastenform 46.

Der in Figur 10 dargestellte seitliche Mittelfuß 25 des Untergestells 17 besitzt die Form eines offenen Kastens 46 mit einer oberen, eine Abstützfläche 48 aufweisenden Wand 47 und einer unteren Wand 49 mit einer Aufstandsfläche 50 sowie zwei an die beiden abgeschrägten Seitenwände 51, 52 des Kastens 46 angerollten Rohrstücken 53, 53 mit zwei abgebogenen Enden, die jeweils einen oberen und einen unteren Nietschaft 34, 35 bilden. Die untere Wand 49 des seitlichen Mittelfußes 25 weist eine innere Abstützfläche 54 für eines der beiden Enden 56 des mittigen Versteifungssteges 55 des Untergestellbodens 18 sowie zwei Nietschäfte 57, 58 zum Vernieten des Mittelfußes mit einem Ende 56 des Versteifungssteges 55 auf.

Gemäß Figur 11 dienen zur Verbindung des Unterrahmens 31 des Gitterkorbs 14 mit dem Untergestellboden 18 beidseits des vorderen, mit dem Boden einteilig gefertigten Mittelfußes 24 jeweils zwei aus dem Unterrahmen 31 ausgeformte, hohle Nietschäfte 59, 59, die durch Nietlöcher 40 im äußeren Rand 30 des Bodens 18 durchgesteckt und deren freie Enden 59a mittels eines Nietwerkzeuges gegen die Unterseite 60 des Bodenrandes 30 zu Schließköpfen 43 verformt sind.

Anstatt von aus dem Unterrahmen 31 des Gitterkorbs 14 ausgeformten Nietschäften 59 können zum Vernieten des Unterrahmens des Gitterkorbs mit dem Untergestellboden 18 gesonderte Hohlniete verwendet werden.

Gemäß Figur 2 ist der vordere Mittelfuß 24 des Untergestells 17 mittels eines Hohlniets 61 mit Setzkopf auf dem Fußrahmen 27 befestigt.

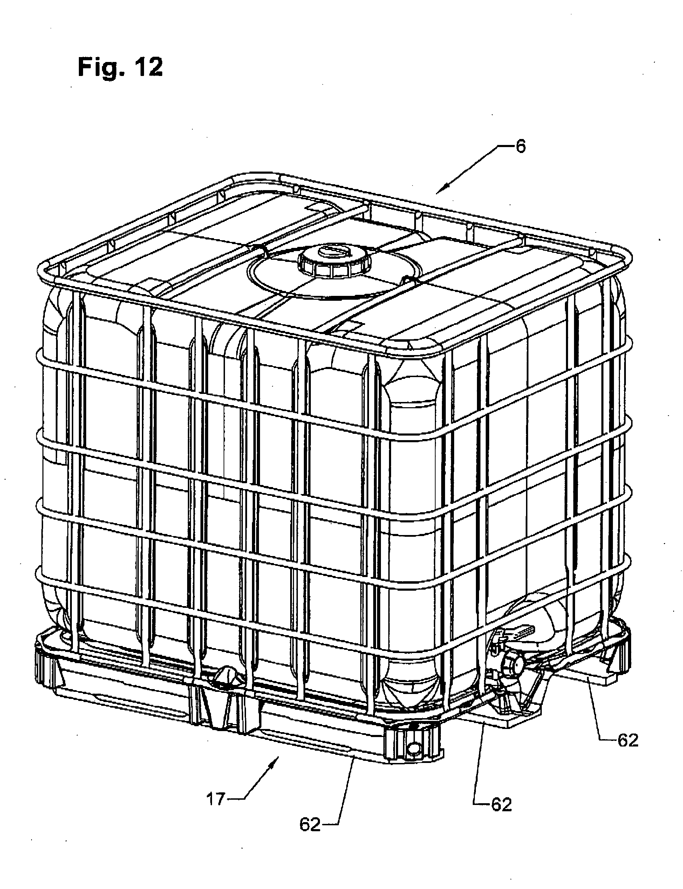

Figur 12 zeigt einen Transport- und Lagerbehälter 6 für Flüssigkeiten, dessen Untergestell 17 mit Holzkufen 62 ausgerüstet ist.

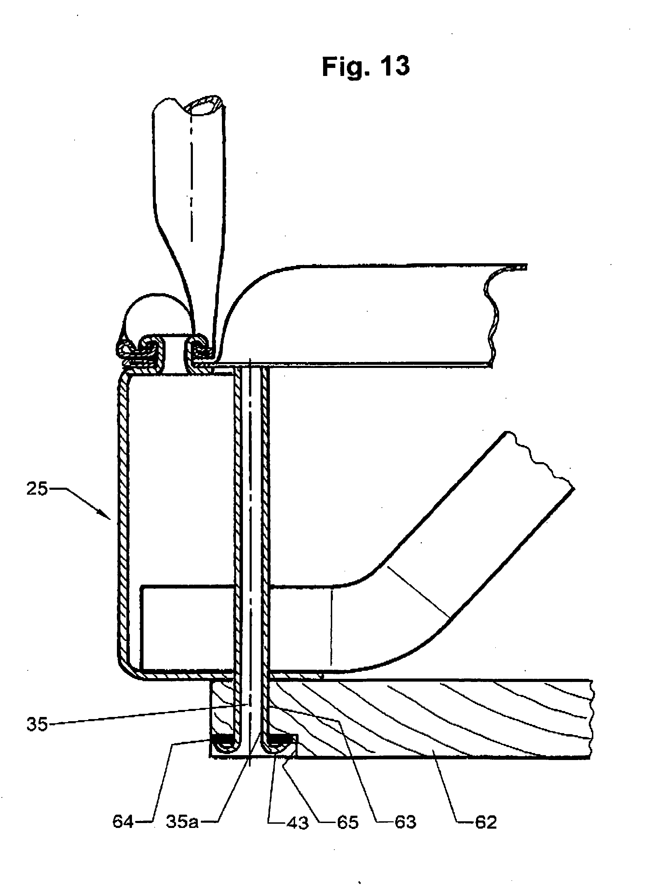

Zur Befestigung des in Figur 13 dargestellten seitlichen Mittelfußes 25 des Untergestells 17 auf einer Holzkufe 62 des Untergestells 17 werden die beiden unteren Nietschäfte 35 des Mittelfußes 25 durch entsprechende Senkbohrungen 63 der Holzkufe 62 durchgesteckt. Anschließend kann jeweils eine Unterlegscheibe 64 auf die freien, über die Holzkufe 62 vorstehenden Enden 35a der Nietschäfte 35 aufgeschoben werden und danach werden die Enden 35a der Nietschäfte 35 mittels eines Nietwerkzeugs zu Schließköpfen 43 verformt, die in der Vertiefung 65 der Senkbohrungen 63 eingelassen sind.

In gleicher Weise werden der zweite seitliche Mittelfuß 26 und der hintere Mittelfuß 23 sowie die vier Eckfüße 19 - 22 auf den Holzkufen 62 des Untergestells 17 angebracht. Zur Befestigung des vorderen Mittelfußes 24 auf der mittleren Holzkufe 62 des Untergestells 17 wird ein Hohlniet mit Setzkopf verwendet.

### Bezugszeichen

- 6: Transport- und Lagerbehälter
- 7: Innenbehälter von 6
- 8: Einfüllstutzen von 7
- 9: Deckel von 8
- 10: oberer Boden von 7
- 11: Entleerstutzen von 7
- 12: unterer Boden von 7
- 13: Entnahme- und Spülhahn von 7
- 14: Gitterkorb von 6
- 15: waagrechter Gitterstab von 14
- 16: senkrechter Gitterstab von 14
- 17: palettenartiges Untergestell
- 18: Boden von 17
- 19-22: Eckfuß von 17
- 23: hinterer Mittelfuß von 17
- 24: vorderer Mittelfuß von 17
- 25,26: seitlicher Mittelfuß von 17
- 27: Fußrahmen von 17
- 28: Schalenblech von 19
- 28a, 28b: äußerer Rand von 28
- 29: oberer Abstützrand von 28
- 29a,29b: äußerer Abschnitt von 29
- 30: äußerer Rand von 18
- 31: Unterrahmen von 14
- 32: unterer Aufstandsrand von 28
- 32a,32b: äußerer Abschnitt von 32
- 33: Oberrahmen von 14
- 34: oberer Nietschaft an 19
- 34a: freies Ende von 34
- 35: unterer Nietschaft an 19
- 35a: freies Ende von 35
- 36: Vertikalabstand von 29,32
- 37: Rohrstück
- 38,39: äußerer Schenkel an 28
- 40: Nietloch in 30
- 41: Nietloch in 31
- 42: Nietloch in 27
- 43: Schließkopf von 34,35,59
- 44,45: Schenkel an 28a,28b
- 46: Kasten von 23,25,26
- 47: obere Wand von 46
- 48: Abstützfläche von 47
- 49: untere Wand von 46
- 50: Aufstandsfläche von 46
- 51,52: Seitenwand von 46
- 53: Rohrstück an 51,52
- 54: Abstützfläche von 49
- 55: Versteifungssteg von 18
- 56: abgebogenes Ende von 55
- 57,58: Nietschaft an 49
- 59: Nietschaft an 31
- 59a: freies Ende von 59
- 60: Unterseite von 30
- 61: Hohlniet
- 62: Holzkufe von 17
- 63: Senkbohrung in 62
- 64: Unterlegscheibe
- 65: Vertiefung von 63

## Patentansprüche

1. Mittelfüße und/oder Eckfüße aus Blech für Transport- und Lagerbehälter (6) für Flüssigkeiten und Schüttgut, die mit einem palettenartigen Untergestell (17), einem auf diesem stehendem Innenbehälter (7) aus Kunststoff mit einem verschließbaren Einfüllstutzen (8) und einem Entleerstutzen (11) zum Anschluß einer Entnahmearmatur (13) sowie einem als Gitterkorb (14) oder Blechmantel ausgebildeten Außenmantel ausgestattet sind, wobei das Untergestell (17) einen Boden (18) zum Abstützen des Innenbehälters (7) auf den Mittelfüßen (23-26) und Eckfüßen (19-22) aufweist, die auf einem Fußrahmen (27)aus Metall oder Kufen (62) aus Metall, Kunststoff oder Holz angebracht sind und an denen der Boden (18) des Untergestells (17) sowie der Außenmantel des Innenbehälters (7) befestigt sind, **dadurch gekennzeichnet, dass** die Mittelfüße (23-26) und/oder die Eckfüße (19-22) einteilig angeformte oder gesondert angeschweißte obere und untere Nietschäfte (34,35)aufweisen, die über die Eckfüße (19-22) beziehungsweise die Mittelfüße (23,25,26) nach oben und unten vorstehen und deren freie Enden (34a,35a) zum Befestigen des Unterrahmens (31) des Gitterkorbes (14) oder des unteren Randes eines Blechmantels und des äußeren Randes (30) des Blechbodens (18) des Untergestells (17) auf den Eckfüßen (19-22) und den Mittelfüßen (23,25,26) und zum Befestigen der Eckfüßen (19-22) und der Mittelfüße (23,25,26) auf dem Fußrahmen (27) des Untergestells (17) zur Ausbildung einer Hohlnietverbindung jeweils zu einem Schließkopf (43) verformbar sind.

2. Mittelfüße und/oder Eckfüße nach Anspruch 1, **dadurch gekennzeichnet, daß** die oberen und die unteren Nietschäfte (34,34;35,35) eines Eckfußes (19) jeweils an den beiden äußeren Abschnitten (29a,29b;32a,32b) eines oberen Abstützrandes (29) und eines unteren Aufstandsrandes (32) eines gewölbten. Schalenblechs (28) des Eckfußes (19) angeordnet sind.

3. Mittelfüße und/oder Eckfüße nach Anspruch 2, **dadurch gekennzeichnet, daß** die unteren Nietschäfte (35,35) des Schalenblechs (28) der Eckfüße (19-22) zu den oberen Nietschäften (34,34) parallel nach innen und in Vertikalrichtung entsprechend dem Vertikalabstand (36) des oberen Abstützrandes (29) und des unteren Aufstandsrandes (32) der Eckfüße (19-22) gegeneinander versetzt angeordnet sind.

4. Mittelfüße und/oder Eckfüße nach Anspruch 3, **dadurch gekennzeichnet, daß** die unteren Nietschäfte (35,35) jeweils an einen von den beiden äußeren Rändern (28a,28b) des Schalenblechs (28) eines Eckfußes (19) nach innen abgewinkelten Schenkel (44,45) angeformt oder angeschweißt sind.

5. Mittelfüße und/oder Eckfüße nach einem der Ansprüche 2 bis 4, **dadurch gekennzeichnet, daß** jeweils ein oberer und ein unterer Nietschaft (34,35) des Schalenblechs (28) eines Eckfußes (19-22) durch die beiden abgebogenen Enden eines Rohrstücks (37) gebildet sind und daß die Rohrstücke (37) an zwei von dem Schalenblech (28) nach innen abgewinkelten, äußeren Schenkeln (38,39) angeformt oder angeschweißt sind.

6. Mittelfüße und/oder Eckfüße nach Anspruch 1, **gekennzeichnet durch** zwei seitliche Mittelfüße (25,26) und einen hinteren Mittelfuß (23) in Form eines offenen Kastens (46) mit einer oberen eine Abstützfläche (48) aufweisenden Wand (47) und einer unteren Wand (49) mit einer Aufstandsfläche (50), zwei an die beiden Seitenwände (51,52) des Kastens (46) angeformten oder angeschweißten Rohrstücken (53,53) mit jeweils einem unteren Nietschaft (35) und zwei oberen, an die Abstützfläche (48) der oberen Kastenwand (47) angeformten oder angeschweißten Nietschäften (34,34).

7. Mittelfüße und/oder Eckfüße nach Anspruch 1, **gekennzeichnet durch** zwei seitliche Mittelfüße (25,26) in Form eines offenen Kastens (46) mit einer oberen eine Abstützfläche (48) aufweisenden Wand (47) und einer unteren Wand (49) mit einer Aufstandsfläche (50) sowie zwei an die beiden abgeschrägten Seitenwände (51,52) des Kastens (46) angeformte oder angeschweißte Rohrstücke (53,53) mit zwei abgebogenen Enden, die jeweils einen oberen und einen unteren Nietschaft (34,35) bilden.

8. Mittelfüße und/oder Eckfüße nach Anspruch 6 oder 7, **dadurch gekennzeichnet, daß** die untere Wand (49) der beiden seitlichen Mittelfüße (25,26) auf der Innenseite eine Abstützfläche (54) für jeweils eines der beiden nach unten abgebogenen, äußeren Enden (56) eines Versteifungssteges (55) des Untergestellbodens (18) besitzt und daß aus der unteren Kastenwand (49) der seitlichen Mittelfüße (25,26) mindestens ein nach innen gerichteter, hohler Nietschaft (57) zum Vernieten der Mittelfüße mit den Enden (56) des Versteifungssteges (55) des Untergestellbodens (18) ausgeformt ist.

9. Mittelfüße und/oder Eckfüße nach einem der Ansprüche 1 bis 8, **dadurch gekennzeichnet, daß** die Nietschäfte (34, 35) an die Eck- und Mittelfüße (19-22;23,25,26) des Untergestells (17) des Transport- und Lagerbehälters (6) angerollt sind.

## Claims

1. Central feet and/or corner feet made of sheet metal for transport and storage containers (6) for liquids and bulk goods, which are equipped with a pallet-like understructure (17), with an inner container (7) standing on the same, being made of plastic and having a closeable filler neck (8) and a drain neck (11) for connecting a tapping armature (13), as well as with an outer jacket that is embodied as a grid basket (14) or as a sheet metal jacket, wherein the understructure (17) features a bottom (18) for supporting the inner container (7) on the central feet (23-26) and on the corner feet (19-22), said feet being mounted onto a foot frame (27) made of metal or onto skids (62) made of metal, plastic or wood, and the bottom (18) of the understructure (17) as well as the outer jacket of the inner container (7) being attached to said feet, **characterised in that** the central feet (23-26) and/or the corner feet (19-22) feature upper and lower rivet stems (34,35) which are moulded thereto in one piece or welded thereto separately, and which upwardly and downwardly project beyond the corner feet (19-22) or the central feet (23,25,26) and whose free ends (34a,35a) can be deformed so as to form a closing head (43) for attaching the subframe (31) of the grid basket (14) or the lower edge of a sheet metal jacket and the outer edge (30) of the sheet metal bottom (18) of the understructure (17) on the corner feet (19-22) and on the central feet (23,25,26) and for attaching the corner feet (19-22) and the central feet (23,25,26) on the foot frame (27) of the understructure (17) for embodying a tubular rivet connection.

2. The central feet and/or the corner feet according to claim 1, **characterised in that** the upper and the lower rivet stems (34,34;35,35) of a corner foot (19) are in each case arranged at the two outer portions (29a,29b;32a,32b) of an upper supporting edge (29) and of a lower bearing edge (32) of a domed shell plate (28) of the corner foot (19).

3. The central feet and/or the corner feet according to claim 2, **characterised in that** the lower rivet stems (35,35) of the shell plate (28) of the corner feet (19-22) are arranged so as to be inwardly offset with respect to each other, in a parallel way with respect to the upper rivet stems (34,34), in the vertical direction corresponding to the vertical distance (36) of the upper support edge (29) and of the lower bearing edge (32) of the corner feet (19-22).

4. The central feet and/or the corner feet according to claim 3, **characterised in that** the lower rivet stems (35,35) are respectively moulded or welded to a leg (44,45) that is inwardly angled from the two outer edges (28a,28b) of the shell plate (28) of a corner foot (19).

5. The central feet and/or the corner feet according to one of the claims 2 to 4, **characterised in that** one upper and one lower rivet stem (34,35) of the shell plate (28) of a corner foot (19-22) is in each case formed by the two bent ends of a pipe section (37) and **in that** the pipe sections (37) are moulded or welded to two outer legs (38,39) that are inwardly angled from the shell plate (28).

6. The central feet and/or the corner feet according to claim 1, **characterised by** two lateral central feet (25,26) and one rear central foot (23) in the shape of an open box (46), having an upper wall (47) that features a supporting surface (48) and a lower wall (49) having a bearing surface (50), two pipe sections (53,53) that are moulded or welded to the two side walls (51,52) of the box (46), having one lower rivet stem (35) and two upper rivet stems (34,34) in each case, the upper rivet stems being moulded or welded to the supporting surface (48) of the upper box wall (47).

7. The central feet and/or the corner feet according to claim 1, **characterised by** two lateral central feet (25,26) in the form of an open box (46), having an upper wall (47) that features a supporting surface (48) and having a lower wall (49) having a bearing surface (50) as well as two pipe sections (53,53) that are moulded or welded to the two bevelled side walls (51,52) of the box (46), having two bent ends, which form an upper and a lower rivet stem (34,35) in each case.

8. The central feet and/or the corner feet according to claim 6 or 7, **characterised in that** the lower wall (49) of the two lateral central feet (25,26), on the inside, possesses a supporting surface (54), in each case for one of the two outer ends (56) of a stiffening web (55) of the understructure bottom (18), the ends being bent downwardly, and **in that** at least one tubular rivet stem (57) is formed so as to protrude from the lower box wall (49) of the lateral central feet (25,26), the rivet stem being oriented inwardly, for riveting the central feet to the ends (56) of the stiffening web (55) of the understructure bottom (18).

9. The central feet and/or the corner feet according to one of the claims 1 to 8, **characterised in that** the rivet stems (34,35) are moulded to the corner feet and to the central feet (19-22;23,25,26) of the understructure (17) of the transport and storage container (6) by means of rolling.

## Revendications

1. Pieds centraux et/ou pieds d'angle en tôle pour des cuves (6) de transport et stockage pour des liquides et pour des produits en vrac qui sont équipés d'un bâti (17) en forme de palette, d'une cuve (7) intérieure reposant sur le même, étant en matière plastique et ayant une tubulure (8) de remplissage fermable et une tubulure (11) de vidage pour le raccordement d'une armature (13) de prélèvement, et équipés d'une enveloppe extérieure qui est conçue comme un panier (14) en treillis ou comme une enveloppe de tôle, le bâti (17) présentant un fond (18) pour l'appui de la cuve (7) intérieure sur les pieds (23-26) centraux et sur les pieds (19-22) d'angle qui sont montés sur un cadre (27) de piètement en métal ou sur des patins (62) en métal, en matière plastique ou en bois et auxquels le fond (18) du bâti (17) ainsi que l'enveloppe extérieure de la cuve (7) intérieure sont fixés, **caractérisés en ce que** les pieds (23-26) centraux et/ou les pieds (19-22) d'angle présentent des tiges de rivet (34,35) supérieures et inférieures qui sont moulées aux mêmes d'un seul tenant ou sont soudées aux mêmes séparément, et qui dépassent les pieds (19-22) d'angle ou les pieds (23,25,26) centraux vers le haut et vers le bas, les extrémités (34a,35a) libres desdites tiges de rivet pouvant être déformées pour former une tête (43) de fermeture pour fixer le cadre (31) inférieur du panier (14) en treillis ou le bord inférieur d'une enveloppe de tôle et le bord (30) extérieur du fond (18) de tôle du bâti (17) sur les pieds (19-22) d'angle et sur les pieds (23,25,26) centraux et pour fixer les pieds (19-22) d'angle et les pieds (23,25,26) centraux sur le cadre (27) de piètement du bâti (17) pour concevoir un assemblage par rivets tubulaires.

2. Pieds centraux et/ou pieds d'angle selon la revendication 1, **caractérisés en ce que** les tiges de rivet (34,34;35,35) d'un pied (19) d'angle chaque fois sont disposées sur les deux parties (29a,29b;32a,32b) extérieures d'un bord (29) d'appui supérieur et d'un bord (32) portant inférieur d'une tôle de bordé (28) courbée du pied (19) d'angle.

3. Pieds centraux et/ou pieds d'angle selon la revendication 2, **caractérisés en ce que** les tiges de rivet(35,35) inférieures de la tôle de bordé (28) des pieds (19-22) d'angle sont disposées de façon à être décalées vers l'intérieur les unes par rapport aux autres et parallèlement par rapport aux tiges (34,34) de rivet supérieures et de façon à correspondre, dans le sens vertical, à la distance verticale (36) du bord (29) d'appui supérieur et du bord (32) portant inférieur des pieds (19-22) d'angle.

4. Pieds centraux et/ou pieds d'angle selon la revendication 3, **caractérisés en ce que** les tiges de rivet (35,35) inférieures chaque fois sont moulées ou soudées contre une branche (44,45) qui est pliée vers l'intérieur à partir des deux bords (28a,28b) extérieurs de la tôle de bordé (28) d'un pied (19) d'angle.

5. Pieds centraux et/ou pieds d'angle selon l'une des revendications 2 à 4, **caractérisés en ce qu'**une tige (34) de rivet supérieure et une tige (35) de rivet inférieure de la tôle de bordé (28) d'un pied (19-22) d'angle est chaque fois formée par les deux extrémités recourbées d'une section (37) de tuyau et **en ce que** les sections (37) de tuyaux sont moulées ou soudées contre deux branches (38,39) extérieures qui sont pliées vers l'intérieur à partir de la tôle de bordé (28).

6. Pieds centraux et/ou pieds d'angle selon la revendication 1, **caractérisés par** deux pieds (25,26) centraux latéraux et un pied (23) central arrière sous forme d'une boîte (46) ouverte, ayant une paroi (47) supérieur qui présente une surface (48) d'appui et une paroi (49) inférieure ayant une surface (50) portante, deux sections (53,53) de tuyaux qui sont moulées ou soudées contre les deux parois (51,52) latérales de la boîte (46), chaque fois ayant une tige (35) de rivet inférieure et deux tiges (34,34) de rivet supérieures qui sont moulées ou soudées contre la surface (48) d'appui de la paroi (47) de boîte supérieure.

7. Pieds centraux et/ou pieds d'angle selon la revendication 1, **caractérisés par** deux pieds (25,26) centraux latéraux sous forme d'une boîte (46) ouverte ayant une paroi (47) supérieure qui présente une surface (48) d'appui et une paroi (49) inférieure ayant une surface (50) portante ainsi que deux sections (53,53) de tuyaux qui sont moulées ou soudées contre les deux parois (51,52) latérales biseautées de la boîte (46), ayant deux extrémités recourbées qui forment une tige (34) de rivet supérieure et une tige (35) de rivet inférieure.

8. Pieds centraux et/ou pieds d'angle selon la revendication 6 ou 7, **caractérisés en ce que** la paroi (49) inférieure des deux pieds (25,26) centraux latéraux, sur le côté intérieur, possède une surface (54) d'appui, chaque fois pour l'une des deux extrémités (56) extérieures d'une entretoise (55) de renforcement du fond (18) de bâti, les extrémités étant recourbées vers le bas, et **en ce qu'**au moins une tige (57) de rivet tubulaire, étant orientée vers l'intérieur, est moulée de façon à dépasser de la paroi (49) de boîte inférieure des pieds (25,26) centraux latéraux, pour riveter les pieds centraux aux extrémités (56) de l'entretoise (55) de renforcement du fond (18) de bâti.

9. Pieds centraux et/ou pieds d'angle selon l'une des revendications 1 à 8, **caractérisés en ce que** les tiges (34,35) de rivet sont moulées contre les pieds d'angle et les pieds centraux (19-22;23,25,26) du bâti (17) de la cuve (6) de transport et stockage par roulement.
